# EUROPÄISCHE PATENTSCHRIFT

(11) **EP 3 282 091 B1**
(45) Veröffentlichungstag und Bekanntmachung des Hinweises auf die Patenterteilung: **16.10.2019**
(21) Anmeldenummer: 17183961.6
(22) Anmeldetag: 31.07.2017
(51) Int. Cl.: F01D 9/04, F01D 9/06, F01D 21/14, B64D 29/08, E05B 51/02, F01D 25/24

(54) **TURBOFAN-TRIEBWERK MIT ÜBERDRUCKKLAPPE AN EINER IM SEKUNDÄRSTROMKANAL LIEGENDEN VERKLEIDUNG**
TURBOFAN ENGINE WITH OVERPRESSURE RELIEF DOOR ON A CASING SITUATED IN THE BYPASS CHANNEL
TURBINE À DOUBLE FLUX COMPRENANT UN CLAPET DE SURPRESSION SUR UN CAPOT SITUÉ DANS UN CANAL DE FLUX SECONDAIRE

(30) Priorität: 11.08.2016 DE 102016215036
(43) Veröffentlichungstag der Anmeldung: 14.02.2018
(73) Patentinhaber: Rolls-Royce Deutschland Ltd & Co KG, 15827 Blankenfelde-Mahlow (DE)
(72) Erfinder: THIES, Robert, 14548 Schwielowsee (DE); SCHULZ, Michael, 14482 Potsdam (DE)
(74) Vertreter: Maikowski & Ninnemann Patentanwälte Partnerschaft mbB

(56) Entgegenhaltungen:
- DE-A1- 2 843 186
- US-A- 4 825 644
- US-A1- 2011 240 137

## Beschreibung

Die Erfindung betrifft ein Turbofan-Triebwerk gemäß dem Oberbegriff des Anspruchs 1.

Turbofan-Triebwerke werden auch als Mantelstrom- oder Nebenstromtriebwerke bezeichnet. Sie zeichnen sich dadurch aus, dass der Fan (auch als Bläser bezeichnet) von einer hinter der Brennkammer des Turbofan-Triebwerks angeordneten Turbine angetrieben wird, wobei ein großer Anteil der von dem Triebwerk angesaugten Luftmasse an einem die Brennkammer aufweisenden Kerntriebwerk vorbei beschleunigt wird. Das Turbofan-Triebwerk bildet dabei einen Primärstromkanal durch das Kerntriebwerk sowie einen Sekundärstromkanal für einen äußeren Fluidstrom, der an dem Kerntriebwerk vorbei geführt wird.

Innerhalb des Turbofan-Triebwerks sind unterschiedliche Leitungen verlegt. Insbesondere müssen Leitungen durch den Sekundärstromkanal radial nach außen geführt werden. In solchen Leitungen ist beispielsweise Luft unter vergleichsweise hohem Druck geführt. Um dabei die Leitungen vor äußeren Einflüssen geschützt durch den Sekundärstromkanal führen zu können, ist üblicherweise eine Verkleidung (englisch "splitter fairing") vorgesehen, die einen Hohlraum für die Leitungen ausgebildet. Diese Verkleidung ist in dem Sekundärstromkanal angeordnet und erstreckt sich bezogen auf eine Mittelachse des Turbofan-Triebwerks insbesondere in radialer Richtung durch den Sekundärstromkanal. Um bei einem Bruch oder einem anderweitigen Versagen einer Leitung einen Überdruck in dem Hohlraum abzubauen, der durch aus der Leitung entweichendes Fluid entsteht, ist eine entsprechende Verkleidung in der Praxis üblicherweise mit einer Durchlassöffnung oder mehreren Durchlassöffnungen versehen. Hierdurch ist jedoch die jeweilige Verkleidung regelmäßig aerodynamisch vergleichsweise ungünstig gestaltet.

Aus der US 2011/0240137 A1 ist wiederum bekannt, an einer Triebwerksgondel (englisch "nacelle") wenigstens eine Überdruckklappe vorzusehen, um bei einem Versagen einer Leitung, in der ein unter Druck stehendes Fluid geführt ist, ein Ausströmen des Fluids in einen das Triebwerk umgebenden Außenraum zu ermöglichen. Hierbei sieht die US 2011/0240137 A1 vor, an einer Außenwand der Triebwerksgondel mindestens eine Überdruckklappe vorzusehen, die durch versagende Befestigungselemente, zum Beispiel mit Sollbruchstellen versehene Niete, bei einem entstehenden Überdruck an der Triebwerksgondel nach außen aufklappbar ist.

Demgegenüber liegt der Erfindung die Aufgabe zugrunde, an einer innerhalb eines Sekundärstromkanals eines Turbofan-Triebwerks liegenden Verkleidung ein aerodynamisch günstigeres Design zu ermöglichen.

Diese Aufgabe wird mit einem Turbofan-Triebwerk des Anspruchs 1 gelöst.

Erfindungsgemäß weist die in dem Sekundärstromkanal (auch Bypass-Kanal oder englisch "bypass duct" genannt) liegende Verkleidung wenigstens eine Überdruckklappe mit mindestens einem elastisch oder plastisch verformbaren Scharnierelement auf, wobei die Überdruckklappe unter Verformung des Scharnierelements (auf)klappbar ist, wenn ein Druck in einem mindestens eine Leitung aufnehmenden Hohlraum der Verkleidung über einen Schwellwert ansteigt. Ferner ist mindestens ein Öffnungsmechanismus vorgesehen, mittels dem bei einem über den Schwellwert ansteigenden Druck in dem Hohlraum eine Fixierung der Überdruckklappe gelöst wird, um ein Aufklappen der Überdruckklappe zu gestatten. Derart kann über eine durch die aufklappende Überdruckklappe freigegebene Öffnung Fluid, das zum Beispiel aus einer gebrochenen Leitung strömt, in Richtung des Sekundärstromkanals aus dem Hohlraum der Verkleidung ausströmen.

Durch das Vorsehen wenigstens einer Überdruckklappe an der in dem Sekundärstromkanal liegenden Verkleidung kann die Verkleidung für einen normalen Betriebszustand aerodynamisch günstig ausgelegt werden. Ein aerodynamisch nachteilige Durchlassöffnungen zum Druckabbau für den Fall, dass eine in der Verkleidung geführte Leitung bricht, ist durch wenigstens eine Überdruckklappe geschlossen und wird erst bei Bedarf, d.h., einem sich einstellenden Überdruck, durch den Öffnungsmechanismus und die aufgedrückte Überdruckklappe freigegeben.

In einer Ausführungsvariante ist vorgesehen, dass der Öffnungsmechanismus mindestens eine Arretiereinrichtung umfasst, die die Überdruckklappe in einer geschlossenen, nicht aufgeklappten Position an der Verkleidung arretiert und die Überdruckklappe bei einem über den Schwellwert ansteigenden Druck in dem Hohlraum freigibt, sodass die Überdruckklappe zumindest teilweise in den Sekundärstromkanal ragt. Mittels der mindestens einen Arretiereinrichtung ist somit ermöglicht, dass die Überdruckklappe zumindest um ein gewisses Maß geöffnet werden kann. Ein eventuelles weiteres Aufklappen der Überdruckklappe kann hierbei dann unter Ausnutzung der Strömung in dem Sekundärstromkanal erfolgen. So kann die Überdruckklappe in eine durch die Arretiereinrichtung freigegebenen, teilweise geöffneten Position derart in den Strömungsweg der Fluidströmung in dem Sekundärstromkanal ragen, dass die Überdruckklappe durch die Fluidströmung weiter aufgeklappt wird.

Vor diesem Hintergrund sieht eine mögliche Weiterbildung beispielsweise vor, dass das Scharnierelement bei über die Arretiereinrichtung freigegebener Überdruckklappe
a) zunächst ein Klappen der Überdruckklappe in eine Zwischenposition gestattet, in der ein Teil der Überdruckklappe in den Sekundärstromkanal ragt, und
b) anschließend unter Einwirkung des in dem Sekundärstromkanal strömenden Fluids, das auf den in den Sekundärstromkanal ragenden Teil der Überdruckklappe trifft, ein weiteres Aufklappen der Überdruckklappe gestattet.
Über das Scharnierelement und die Arretiereinrichtung ist somit ein zweistufiges Öffnen der Überdruckklappe ermöglicht, wenn der Druck in dem Hohlraum über den Schwellwert ansteigt. Zunächst wird eine erste Aufklappbewegung um einen vergleichsweise kleinen Verstellweg in die Zwischenposition gestattet, in der bereits Fluid aus dem Hohlraum entweichen kann. Im Betrieb des Turbofan-Triebwerks wird die Überdruckklappe durch die Fluidströmung in dem Sekundärstromkanal weiter auf- und gegebenenfalls umgeklappt und damit der Überdruckklappe eine zweite Aufklappbewegung entlang eines üblicherweise deutlich größeren Verstellwegs aufgezwungen.

Die erste Aufklappbewegung in die Zwischenposition kann dabei allein durch den über den Schwellwert angestiegenen Druck in dem Hohlraum gesteuert sein. Alternativ oder ergänzend kann die Überdruckklappe in Richtung der Zwischenposition vorgespannt, insbesondere federnd vorgespannt sein. Eine entsprechende Vorspannung in eine Aufklapprichtung kann dabei z.B. über ein Federelement der Arretiereinrichtung aufgebracht sein, an dem die Überdruckklappe in ihrer geschlossenen Position anliegt oder gegen das sich die Überdruckklappe in ihrer geschlossenen Position abstützt. Ein solches Federelement kann beispielsweise durch eine Druckfeder, eine Gummierung am Rand der Überdruckklappe und/oder an einem Bereich der Verkleidung in der Umgebung der Überdruckklappe und/oder durch ein Gummibauteil zwischen der Überdruckklappe und einem Rand eines von der Überdruckklappe geschlossenen Durchlasses gebildet sein.

Im Zusammenhang mit dem vorstehend erläuterten Ausführungsbeispiel, bei dem eine zweistufige Aufklappbewegung der Überdruckklappe vorgesehen ist und das weitere Aufklappen nach einer Freigabe der Überdruckklappe unter Unterstützung der Fluidströmung in dem Sekundärstromkanal erfolgen soll, kann ein schnelles weiteres Aufklappen der Überdruckklappe (in der zweiten Aufklappbewegung) durch eine entsprechende Anordnung des Scharnierelements und der Arretiereinrichtung relativ zueinander unterstützt werden. Beispielsweise ist in einer Ausführungsvariante vorgesehen, dass das Scharnierelement und die Arretiereinrichtung derart an der Verkleidung angeordnet sind, dass die über die Arretiereinrichtung freigegebene Überdruckklappe bei einem über den Schwellwert angestiegenen Druck in dem Hohlraum in eine Zwischenposition klappt, in der der in den Sekundärstromkanal ragende Teil der Überdruckklappe bezogen auf die Strömungsrichtung des Fluids in dem Sekundärstromkanalstrom stromauf des Scharnierelements liegt. Die Kraft des strömenden Fluids wirkt somit in Richtung des Scharnierelements, wenn sich die Überdruckklappe in der Zwischenposition befindet. Die Überdruckklappe wird somit direkt in Strömungsrichtung weiter aufgeklappt.

In einer Ausführungsvariante weist der Öffnungsmechanismus mindestens einen zuvor definierten Schwächungsbereich auf, an dem bei einem über den Schwellwert ansteigenden Druck in dem Hohlraum ein Materialversagen auftritt, um ein Aufklappen der Überdruckklappe zu gestatten. In dieser Variante wird somit - alternativ oder ergänzend zu einer Arretiereinrichtung des Öffnungsmechanismus - an wenigstens einer Stelle ein Materialversagen gezielt zugelassen, um ein Aufdrücken der Überdruckklappe infolge des über den Schwellwert gestiegenen Drucks zu ermöglichen.

Bei einer Ausführungsvariante mit einer Arretiereinrichtung kann beispielsweise eine Fixierung der Überdruckklappe in der geschlossenen Position über ein bei Überdruck versagendes Arretierstück vorgesehen sein. Ein solches Arretierstück, beispielsweise in Form eines Stiftes oder Bolzens, kann dabei an einem Rand der von der Überdruckklappe verschlossenen Durchlassöffnung und an der Überdruckklappe gehalten und derart ausgelegt sein, dass das Arretierstück bei einem Überdruck versagt, beispielsweise durch Abscherung, und damit die Überdruckklappe freigibt. In einer Variante ist ein entsprechendes Arretierstück zum Beispiel aus einem spröden Material, beispielsweise einem keramischen Material hergestellt, und vergleichsweise klein dimensioniert, sodass es bei einem über einen vorgegebenen Schwellwert ansteigenden Druck innerhalb des Hohlraums versagt.

Das Arretierstück ist in einer Weiterbildung bei der Montage der Verkleidung nachträglich an der geschlossenen Überdruckklappe anbringbar, um diese in der geschlossenen Position zu fixieren. Hierfür wird beispielsweise ein längliches Arretierstück an ein erstes Teil der Arretiereinrichtung am Rand der Durchlassöffnung und ein zweites Teil der Arretiereinrichtung an der Überdruckklappe eingeschoben und in einer Verriegelungsposition, in der beide Teile über das Arretierstück starr miteinander verbunden sind, verriegelt. Beispielsweise erfolgt die Verriegelung über ein separates Verriegelungselement, das das Arretierstück gegen eine Verlagerung aus der Verriegelungsposition sichert.

Der mindestens eine Schwächungsbereich, zum Beispiel in Form einer Sollbruchstelle, kann an einem Element und/oder einem Abschnitt ausgebildet sein, über das oder den die Überdruckklappe in einer geschlossenen, nicht ausgeklappten Position gehalten ist. Erst durch das Versagen an dem Schwächungsbereich wird somit die Überdruckklappe um eine durch das wenigstens eine Scharnierelement definierte Schwenkachse klappbar, um einen in dem Hohlraum der Verkleidung entstehenden Überdruck abzubauen.

In einer Ausführungsvariante ist hierfür der mindestens eine Schwächungsbereich an einem Element ausgebildet, das mit der Überdruckklappe verbunden ist. Der mindestens eine Schwächungsbereich kann hierbei an einem Befestigungselement - wie zum Beispiel einem Bolzen, Stift oder Niet - ausgebildet sein, über das die Überdruckklappe in der geschlossenen Position bezüglich einer Mantelfläche der Verkleidung fixiert ist und das bei einem in dem Hohlraum über den Schwellwert ansteigenden Druck definiert an dem mindestens einen Schwächungsbereich versagt. Ein gezieltes Versagen des jeweiligen Befestigungselements kann hierbei z.B. insbesondere durch Abscherung erfolgen. Steigt beispielsweise ein Druck in dem Hohlraum durch eine platzende Leitung (stark) an, versagt ein die Überdruckklappe in Position haltender und mit einer Sollbruchstelle versehener Niet und blockiert damit ein Aufklappen der Überdruckklappe nicht mehr.

In einer Ausführungsvariante ist die Überdruckklappe über mehrere (mindestens zwei) an einer Mantelfläche der Verkleidung vorgesehene, d.h., hieran fixierte oder hiervon ausgebildete, Halteelemente in der geschlossenen Position fixiert. Dabei ist die Überdruckklappe mit jedem Halteelement über mindestens ein Befestigungselement verbunden, das mindestens einen Schwächungsbereich aufweist. Über die einzelnen Halteelemente ist die Überdruckklappe somit an der Mantelfläche der Verkleidung in Position gehalten. Im Falle eines sich in dem Hohlraum einstellenden Überdrucks (Im Vergleich zu einem normalen Betriebszustand) können jedoch die einzelnen Befestigungselemente an dem jeweiligen Schwächungsbereich, zum Beispiel einer Sollbruchstelle, gezielt versagen, sodass die Überdruckklappe mit dem jeweiligen Halteelement nicht mehr verbunden und über das wenigstens eine verformbare Scharnierelement nach außen klappbar ist. Die Halteelemente können beispielsweise laschenartig ausgebildet sein. Die Halteelemente sind in einer Variante einerseits an einem Rand einer in der Mantelfläche der Verkleidung ausgebildeten Durchlassöffnung fixiert oder hieran ausgeformt, sodass ein Ende des jeweiligen laschenartigen Halteelements in die Durchgangsöffnung ragt. An dem in die Durchgangsöffnungen ragenden Ende eines laschenartigen Halteelements ist dann jeweils die Überdruckklappe über ein mit einer Sollbruchstelle versehenes Befestigungselement fixiert.

Alternativ oder ergänzend kann der mindestens eine Schwächungsbereich zwischen zwei separat aufklappbaren Abschnitten der Überdruckklappe selbst ausgebildet sein. Über den mindestens einen Schwächungsbereich ist somit eine wenigstens zweigeteilte Überdruckklappe bereitgestellt, bei der einzelne Klappenabschnitte im Überdruckfall um separate Scharnierelemente nach außen klappen können. Eine solche wenigstens zweigeteilte Überdruckklappe kann beispielsweise auch an einer Hinterkante der Verkleidung, d.h. an einer in Strömungsrichtung des Fluids in dem Sekundärstromkanal liegenden Kante der Verkleidung, ausgebildet sein. Beispielsweise verläuft hierbei eine Sollbruchstelle an der Hinterkante der Verkleidung selbst, sodass in einem ÜberdruckFall die Verkleidung an der Hinterkante bricht und sich ein zu der Hinterkante verjüngender und damit aerodynamisch günstig geformter hinterer Abschnitt aufweiten kann, um Fluid in den Sekundärstromkanal entweichen zu lassen. Hier ist folglich über wenigstens eine Sollbruchstelle ein Aufklappen der Verkleidung an einer in Strömungsrichtung liegenden Hinterkante ermöglicht, sodass ein die Hinterkante definierender Teil der Verkleidung eine wenigstens zweigeteilte Überdruckklappe ausbildet.

Den vorgenannten Ausführungsvarianten ist gemein, dass die Überdruckklappe bei einem über einen Schwellwert ansteigenden Druck in dem Hohlraum der Verkleidung unter Verformung des mindestens einen Scharnierelements in den Sekundärstromkanal klappbar ist. Über das Aufklappen der Überdruckklappe wird damit eine den Hohlraum mit dem Sekundärstromkanal verbindende Durchlassöffnung freigegeben.

In Abweichung hierzu kann jedoch auch vorgesehen sein, dass eine Überdruckklappe der Verkleidung eine Durchlassöffnung freigibt, die den die mindestens eine Leitung aufnehmenden Hohlraum der Verkleidung nur mit einem Zwischenraum verbindet, der durch ein mit der Verkleidung verbundenes Hinterkantenelement gebildet ist. Ein solches separates Hinterkantenelement ist vorzugsweise lösbar mit der Verkleidung verbunden und definiert eine in einer Strömungsrichtung des Fluids in dem Sekundärstromkanal liegende Hinterkante. Während die Verkleidung hierbei somit mit Fokus auf ausreichende Festigkeit und Steifigkeit bei einer versagenden Leitung und gegebenenfalls auch aus einem feuerfesten Material ausgebildet ist, dient das separate Hinterkantenelement lediglich der aerodynamisch vorteilhaften Führung des in dem Sekundärstromkanal strömenden Fluids über die Verkleidung und das Hinterkantenelement hinweg. Das an die Verkleidung angesetzte Hinterkantenelement kann hierbei beispielsweise in Strömungsrichtung spitz zulaufend ausgebildet sein. Beispielsweise bildet das Hinterkantenelement somit einen im Querschnitt im Wesentlichen dreiecksförmigen Zwischenraum aus, in den im Überdruckfall und nach Aufklappen der Überdruckklappe Fluid aus dem Hohlraum der Verkleidung strömt.

Um ein Ausströmen von Fluid aus dem Zwischenraum des Hinterkantenelements in den Sekundärstromkanal zu ermöglichen, weist dann beispielsweise das Hinterkantenelement eine Durchgangsöffnung auf, die den Zwischenraum mit dem Sekundärstromkanal verbindet. Im Überdruckfall kann somit Fluid aus dem Hohlraum über die von der Überdruckklappe der Verkleidung freigegebene Durchlassöffnung in den Zwischenraum und von hier aus in den Sekundärstromkanal über eine weitere stets offene Durchgangsöffnung des Hinterkantenelements strömen.

Alternativ oder ergänzend kann auch das Hinterkantenelement wenigstens eine (zusätzliche) Überdruckklappe aufweisen, die unter Versagen an mindestens einem weiteren Schwächungsbereich und unter Verformung mindestens eines weiteren Scharnierelements an dem Hinterkantenelement in den Sekundärstromkanal klappbar ist, wenn ein Druck in dem Zwischenraum über einen (anderen oder identischen) Schwellwert ansteigt. In dieser Variante ist folglich ein zweistufiger Druckabbau über unterschiedliche und nacheinander aufklappende Überdruckklappen an der Verkleidung einerseits und dem separaten Hinterkantenelement andererseits vorgesehen. Steigt ein Druck in dem Hohlraum der Verkleidung, zum Beispiel über das Versagen einer Druckluft führenden Leitung, so stark an, dass die Überdruckklappe der Verkleidung aufgedrückt wird, gelangt Fluid in den Zwischenraum des Hinterkantenelements und lässt hier ebenfalls den Druck so weit ansteigen, dass anschließend eine Hinterkanten-Überdruckklappe aufgedrückt wird. Diese Hinterkanten-Überdruckklappe klappt dann in den Sekundärstromkanal, sodass erst dann ein (größerer) Massenstrom in den Sekundärstromkanal entweichen kann.

Die beigefügten Figuren veranschaulichen exemplarisch mögliche Ausführungsvarianten der Erfindung.

Hierbei zeigen:
- Figuren 1A-1B: eine Ausführungsvariante eines erfindungsgemäßen Turbofan-Triebwerks mit ausgeblendeter Kerntriebwerksabdeckung und ausgeblendeter Ummantelung eines Sekundärstromkanals jeweils in perspektivischer Ansicht;
- Figur 2A-2B: ausschnittsweise jeweils eine Verkleidung des Turbofan-Triebwerks für eine in dem Sekundärstromkanal radial zu führende Leitung mit geschlossener (Figur 2A) und aufgeklappter (Figur 2B) Überdruckklappe;
- Figur 3: in perspektivischer Ansicht eine weitere Variante einer Verkleidung für die Leitungsführung in dem Sekundärstromkanal mit einer nach außen in den Sekundärstromkanal klappbaren Überdruckklappe an einer seitlichen Mantelfläche der Verkleidung;
- Figur 4A: in Seitenansicht und vergrößerter Darstellung mit Blick auf eine Innenseite der seitlichen Mantelfläche die Überdruckklappe der Figur 3;
- Figur 4B: ausschnittsweise die Innenseite der mit der Überdruckklappe versehenen seitlichen Mantelfläche der Verkleidung der Figur 3;
- Figur 4C: ausschnittsweise eine seitliche und eine hintere Mantelfläche der Verkleidung der Figur 3 mit zwei möglichen alternativ ausgestalteten Überdruckklappen;
- Figur 5A: eine perspektivische Ansicht der Verkleidung mit einer Überdrucklappe, die auf einer gegenüberliegenden Seite der Mantelfläche vorgesehen ist;
- Figur 5B: ausschnittsweise die Verkleidung der Figur 5A mit Blick auf eine Innenseite der Überdruckklappe und eine die Überdruckklappe in der geschlossenen Position fixierende Arretiereinrichtung;
- Figuren 6A-6D: die Überdruckklappe der Figuren 5A und 5B in unterschiedlichen Phasen eines mehrstufig ablaufenden Aufklappens;
- Figuren 7A - 7D: unterschiedliche Ansichten einer Ausführungsvariante mit einer Überdruckklappe, die über eine Arretiereinrichtung mit einem bei Überdruck versagenden Arretierstift in einer geschlossenen Position fixiert ist.

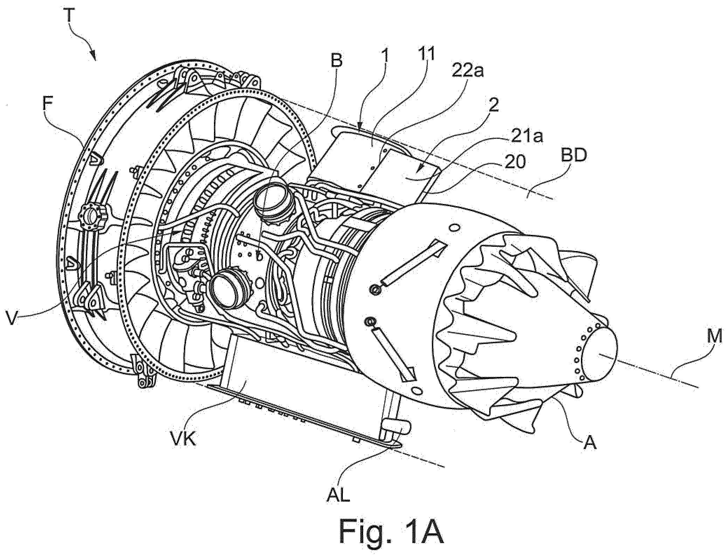

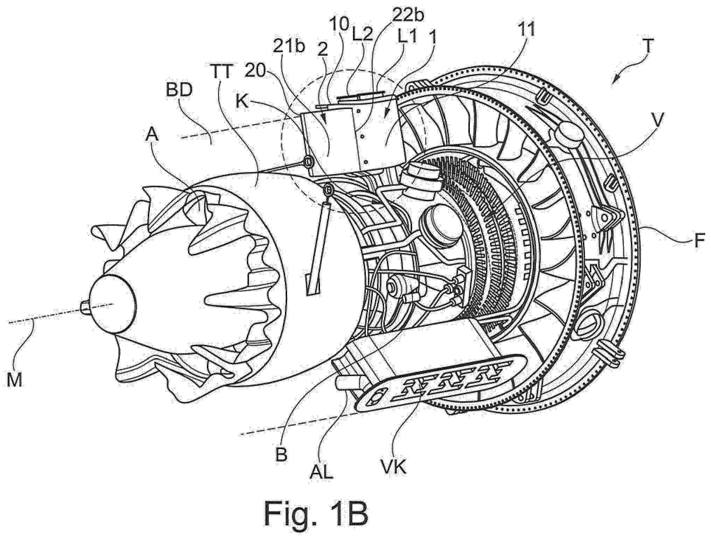

Die Figuren 1A und 1B zeigen in perspektivischer Darstellung ein Turbofan-Triebwerk T, bei dem in an sich bekannter Weise ein Fan F, ein Verdichter V, ein Brennkammerabschnitt B, eine Turbine TT und ein Auslass A entlang einer Mittelachse M des Turbofan-Triebwerks T hintereinander angeordnet sind. Der Verdichter V weist typischerweise einen Niederdruck-, Mitteldruck- und Hochdruckverdichter auf. Ebenso ist eine Hochdruck-, Mitteldruck- und Niederdruckturbine Teil der Turbine TT, über die der Fan F angetrieben wird. Der Verdichter V, der Brennkammerabschnitt B und die Turbine TT sind Teil eines Kerntriebwerks K des Turbofan-Triebwerks T, dem über den Fan F ein Primärstrom an einströmenden Fluid zugeführt wird. Ein entsprechender Primärstromkanal für das einströmende Fluid verläuft folglich durch das Kerntriebwerk K entlang der Mittelachse M.

Ergänzend hierzu ist für die Aufbringung eines Großteils des Schubs ein Sekundärstromkanal in Form eines das Kerntriebwerk K umgebenden Bypasskanals BD vorgesehen. Diesem Bypasskanal BD wird über den Fan F ein Großteil des einströmenden Fluids zugeleitet und in Richtung des Auslasses A gefördert. Der Bypasskanal BD wird dabei von einer radial innen liegenden und in den Figuren 1A und 1B nicht dargestellten Kerntriebwerksabdeckung und einer radial außen liegenden und in den Figuren 1A und 1B ebenfalls nicht dargestellten Bypasskanalwandung begrenzt.

Innerhalb des Bypasskanals BD sind vorliegend zwei jeweils gehäuseartig ausgebildete Verkleidungen 1 und VK (englisch "splitter fairing") vorgesehen. Diese (oberen und unteren) Verkleidungen 1 und VK sind vollständig innerhalb des Bypasskanals BD angeordnet und erstrecken sich bezogen auf die Mittelachse M in radialer Richtung zwischen der Kerntriebwerksabdeckung und der radial weiter außen liegenden Bypasskanalwandung. Die Verkleidungen 1 und VK erstrecken sich jeweils auch in diejenige Strömungsrichtung, in der das Fluid vom Fan F durch den Bypasskanal BD in Richtung des Auslasses strömt. Dabei sind die Verkleidungen 1 und VK jeweils zur schützenden Ummantelung unterschiedlicher Leitungen vorgesehen, die in radialer Richtung bezüglich der Mittelachse M verlaufen und durch den Bypasskanal BD in radialer Richtung hindurchgeführt werden müssen. Beispielsweise wird in diesen Leitungen Kraftstoff, Öl oder Luft geführt. An der einen Verkleidung VK ist beispielsweise zudem eine Auslassleitung AL vorgesehen, über die eine Fluidverbindung zwischen einem Hohlraum in der Triebwerksgondel und dem Bypasskanal BD bereitgestellt ist.

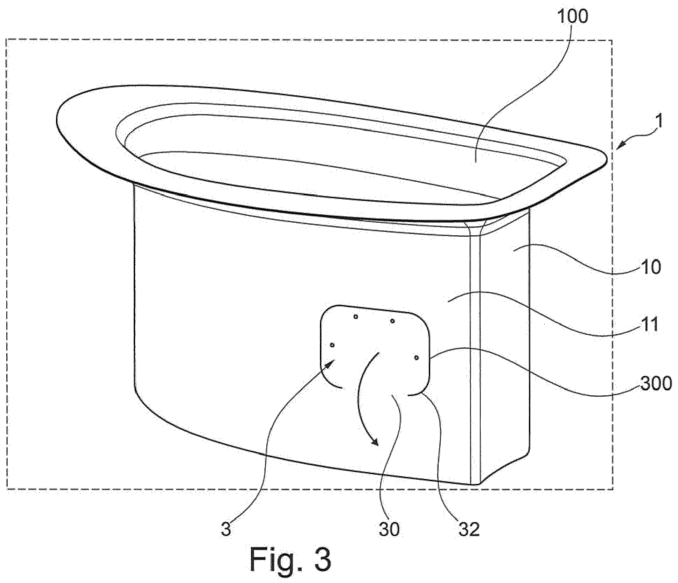

Die Verkleidungen 1 und VK sind über den Umfang des Kerntriebwerks K versetzt zueinander angeordnet und nehmen vorliegend unterschiedliche Leitungen auf. In der Verkleidung 1 sind beispielsweise wenigstens zwei Leitungen L1 und L2 in einem von der Verkleidung 1 definierten Hohlraum 100 (vgl. Figur 3) aufgenommen, die jeweils unter Druck stehende Luft führen. Hierfür ist die Verkleidung 1 holzylindrisch ausgeführt.

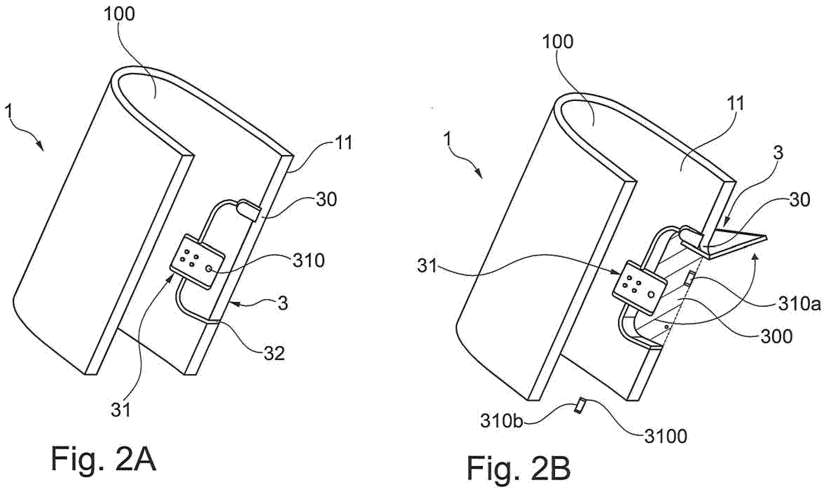

Die Verkleidung 1 ist mit einer Überdruckklappe ausgestattet, die bei einem Überdruck in dem von ihr umschlossenen Hohlraum 100, zum Beispiel aufgrund des Brechens einer der Leitungen L1 oder L2, dass entweichen von Fluid in Richtung des Bypasskanals BD gestattet. Eine entsprechende Überdruckklappe ist beispielsweise an einer seitlichen Mantelfläche 11 oder einer hinteren Mantelfläche 10 vorgesehen (vgl. Figuren 2A bis 4C).

Im Bereich der hinteren Mantelfläche 10 ist entsprechend den Figuren 1A und 1B vorliegend ein separates Hinterkantenelement 2 lösbar mit der Verkleidung 1 verbunden.

Das Hinterkantenelement 2 läuft in Strömungsrichtung des in dem Bypasskanal BD geführten Fluids spitz zu, sodass sich für die mit dem Hinterkantenelement 2 versehene Verkleidung 1 ein verbessertes Strömungsprofil ergibt.

In einer möglichen Weiterbildung, bildet das Hinterkantenelement 2 im Bereich der Hinterkante einen Schwächungsbereich in Form einer längserstreckten Sollbruchstelle 20 aus. Über diese hier radial verlaufende Sollbruchstelle 20 kann das Hinterkantenelement 2 bei einem größeren innen anliegenden Druck gezielt versagen. An der Sollbruchstelle 20 wird das Hinterkantenelement 2 dabei in zwei Klappenabschnitte 21a und 21b getrennt. Die Klappenabschnitte 21a und 21b sind hierbei jeweils noch an einer seitlichen Mantelfläche 11 der Verkleidung 1 fixiert. Hierdurch können sich die Klappenabschnitte 21a, 21b nach einem Brechen entlang der durch die Sollbruchstelle 20 definierten Sollbruchlinie im Bereich der ursprünglichen Hinterkante zueinander verlagern. Das Hinterkantenelement 2 kann somit bei einem ansteigenden Innendruck aufgeweitet werden, um Fluid in den Bypasskanal BD, und zwar in die Strömungsrichtung entlang der Mittelachse M ausströmen zu lassen. Die Anbindung eines Klappenabschnitts 21a, 21b an die jeweilige seitliche Mantelfläche 11 der Verkleidung 1 dient dabei als ein Scharnierelement 22a oder 22b, an dem eine Verformung gezielt zugelassen ist, um den jeweiligen Klappenabschnitt 21a und 21b aufbiegen und nach außen klappen zu können.

Abweichend von der Darstellung der Figuren 1A und 1B kann das Hinterkantenelement 2 auch integraler Bestandteil der Verkleidung 1 sein. Es muss folglich kein separater Druckkörper für die Aufnahme der Leitungen L1 und L2 sowie zusätzlich ein hieran befestigtes Hinterkantenelement 2 vorgesehen sein. Vielmehr ist hier dann die Verkleidung 1 bereits mit einem gegebenenfalls spitz zulaufenden Hinterkantenelement 2 integral ausgebildet, das im Fall des Bruchs einer Leitung L1 oder L2 an einer Sollbruchstelle 20 an der Hinterkante gezielt versagt und sich aufweiten kann, um z.B. Luft aus dem Inneren der Verkleidung 1 in den Bypasskanal BD strömen zu lassen.

In einer anderen Ausführungsvariante ist eine Überdruckklappe 3 an einer seitlichen Mantelfläche 11 der Verkleidung 1 und damit unabhängig von einem Hinterkantenelement 2 ausgestaltet. Beispielsweise ist in einer Ausführungsvariante entsprechend den Figuren 2A und 2B an einer den Hohlraum 100 für die Leitungen L1 und L2 berandenden seitlichen Mantelfläche 11 eine lokal reduzierte Wandstärke zur Bildung eines Scharnierelements 30 vorgesehen. An diesem Scharnierelement 30 wird eine Biegung des Materials der Verkleidung 1 gezielt zugelassen, wenn ein Druck in dem Hohlraum 100 über einen vorgegebenen Schwellwert hinaus ansteigt. Die Überdruckklappe 3 ist hierbei über das Scharnierelement 30 an der seitlichen Mantelfläche 11 um eine Biegeachse klappbar und über einen ansonsten umlaufenden Spalt 23 an der seitlichen Mantelfläche 11 ausgeschnitten.

Damit die Überdruckklappe 3 erst bei einem entstehenden Überdruck nach außen in Richtung des Bypasskanals BD klappt und ansonsten in einer geschlossenen Position verbleibt, ist in der Ausführungsvariante der Figuren 2A und 2B eine Haltelasche 31 als Teil eines Öffnungsmechanismus vorgesehen. Diese Haltelasche 31 ist an einer Innenseite der seitlichen Mantelfläche 11 fixiert oder hieran ausgeformt und mit der Überdruckklappe 3 mittels eines Haltepins 310 verbunden. Der Haltepin 310 ist mit einer Sollbruchstelle 3100 versehen. An dieser Sollbruchstelle 3100 versagt der Haltepin 310, wenn an der Überdruckklappe 3 aufgrund eines in dem Hohlraum 100 angestiegenen Drucks eine über einem (Kraft-) Schwellwert liegende und nach außen wirkende Kraft anliegt. Dann versagt der Haltepin 310 gezielt an der Sollbruchstelle 3100 und zerfällt in zwei Pinhälften 310a und 310b. Die Überdruckklappe 3 steht dann nur noch über das als Biegegelenk fungierendes Scharnierelement 30 mit der seitlichen Mantelfläche 11 in Verbindung und wird unter plastischer, gegebenenfalls elastischer Verformung des Scharnierelements 30 nach außen geklappt. Durch die nach außen geklappte Überdruckklappe 3 ist dann eine Durchlassöffnung 300 in der seitlichen Mantelfläche 11 freigegeben, über die zum Druckabbau Fluid in größerer Menge in den Bypasskanal BD strömen kann.

Das vorliegend durch einen Bereich lokal reduzierter Wandstärke gebildete Scharnierelement 30 kann über die Dicke / Wandstärke, Form und Größe einer Abflachung derart ausgelegt werden, dass sich ein definierter, maximaler Öffnungswinkel für die aufgeklappte Überdruckklappe 3 ergibt. Ebenfalls ist eine Ausbildung des Scharnierelements 30 aus Federstahl oder einem Kunststoffmaterial denkbar. Abweichend von der dargestellten streifenförmigen Ausprägung des Scharnierelements 30 kann dieses selbstverständlich geometrisch auch anders ausgestaltet sein.

Der Spalt 32 der die Überdruckklappe 30 an der seitlichen Mantelfläche 11 zumindest teilweise umlaufend umgibt kann in einer Weiterbildung auch mit einer Dichtung versehen sein, um bei geschlossener Überdruckklappe 2 ein Ausströmen von Fluid aus dem Hohlraum 100 in den Bypasskanal BD zu verhindern und erst bei einem Versagen des Befestigungselements in Form des Haltepins 310 ein Ausströmen von Fluid zu gestatten In der Figur 3 ist eine alternativ ausgestaltete, hohlzylindrische Verkleidung 1 veranschaulicht, bei der eine Überdruckklappe 3 ebenfalls an einer seitlichen Mantelfläche 11 ausgebildet ist. Hierbei ist die Überdruckklappe 3 über einen Öffnungsmechanismus mit mehreren Haltelaschen 31.1, 31.2, 31.3 und 31.4 in einer geschlossenen Position gehalten. An jeder Haltelasche 31.1 - 31.4 ist jeweils ein Haltepin 310, zum Beispiel in Form eines Niets, mit je einer Sollbruchstelle vorgesehen. Über den jeweiligen Haltepin 310 ist die Überdruckklappe 3 an der zugeordneten Haltelasche 31.1 - 31.4 festgelegt. Liegt im Hohlraum 100 ein erhöhter Druck an, versagen die Haltepins 310 und die Verbindung der Überdruckklappe 3 mit den einzelnen Haltelaschen 31.1 - 31.4 wird gelöst, sodass die Überdruckklappe 3 an der seitlichen Mantelfläche 11 nach außen klappen kann. Insbesondere über die Anzahl der Haltepins 310 und/oder der Haltelaschen 31.1 - 31.4 mit jeweils einem Haltepin 310 oder mehreren Haltepins 310 kann gezielt eingestellt werden, bei welchem anliegenden Druck innerhalb des Hohlraums 100 ein Aufklappen der Überdruckklappe 3 erfolgt.

Das Aufklappen der Überdruckklappe 3 geschieht um eine von einem Scharnierelement 30 definierte Biegeachse unter Verformung des entsprechenden Scharnierelements 30. Hierbei ist das Scharnierelement 30 durch einen Abschnitt reduzierter Wandstärke an der seitlichen Mantelfläche 11 gebildet, an dem die Überdruckklappe 3 noch mit der seitlichen Mantelfläche 11 integral verbunden und nicht über einen Spalt 32 freigeschnitten ist.

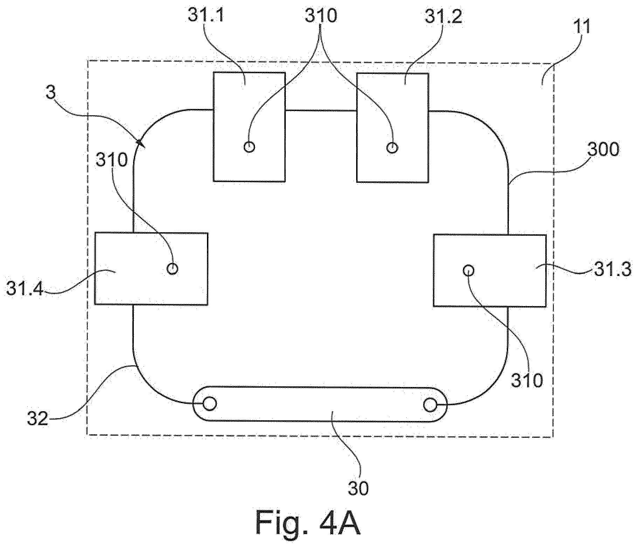

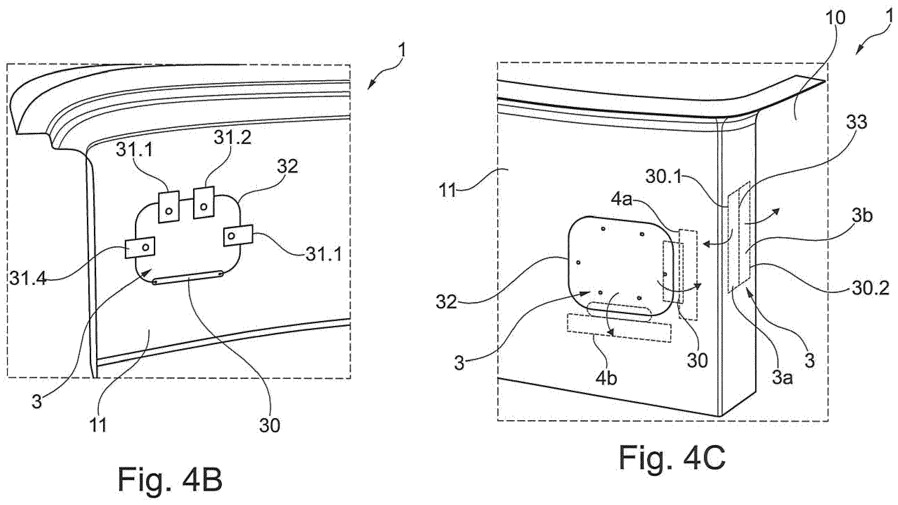

Anhand der Figuren 4B ist in Übereinstimmung mit der Figur 4A die Überdruckklappe 3 an der seitliche Mantelfläche 11 der Verkleidung 1 in vergrößertem Maßstab veranschaulicht. Hieraus ist auch ersichtlich, dass die Haltelaschen 31.1 - 31.4 auf einer dem Hohlraum 100 zugewandten Innenseite der seitlichen Mantelfläche 11 angebracht sind und in die durch die Überdruckklappe 3 freizugebende Durchlassöffnung 300 ragen. Auf diese Art und Weise ist durch die Haltelaschen 31.1 - 31.4 ein Klappen der Überdruckklappe 3 nach innen in den Hohlraum 100 hinein blockiert. Auch bei gebrochenen Haltepins 310 ist somit die Überdruckklappe 3 durch die einzelnen Haltelaschen 31.1 - 31.4 an einem Klappen nach innen in den Hohlraum 100 gehindert. Es wird letztlich lediglich aus der geschlossenen Position ein Klappen nach außen in den Bypasskanal BD gestattet.

Mit der Figur 4C sind anhand gestrichelter Linien noch weitere ergänzende oder alternative Ausprägungen von Überdruckklappen 3 an der Verkleidung 1 und von Öffnungsmechanismen veranschaulicht.

So kann eine Überdruckklappe 3 an der seitlichen Mantelfläche 11 über ein Scharnierelement 30 auch derart in den Bypasskanal BD klappbar sein, dass die aufklappende Überdruckklappe 3 in Strömungsrichtung und damit nach hinten entlang der Mittelachse M aufgebogen wird.

Ebenso ist eine Ausbildung einer Überdruckklappe 3 an einer hinteren Mantelfläche 10 der Verkleidung 1 denkbar, bei der die Überdruckklappe zweiteilig mit flügelartigen Klappenabschnitten 3a und 3b ausgeführt ist. Diese Klappenabschnitte 3a und 3b sind jeweils unter Verformung eines Scharnierelement 30.1, 30.2 an der hinteren Mantelfläche 10 aufklappbar ausgeführt und im geschlossenen Zustand entlang einer Sollbruchstelle 33 miteinander verbunden. Die Sollbruchstelle 33 erstreckt sich dabei entlang einer Sollbruchlinie, die beispielsweise im Wesentlichen radial zur Mittelachse M verläuft, aber auch quer hierzu oder entlang eines Kreisbogenabschnitts um die Mittelachse M verlaufen kann (letztere Varianten in der Figur 4C nicht dargestellt). Über die Sollbruchstelle 33 ist die Überdruckklappe 3 - z. B. längs - geteilt, sodass bei einem Versagen an der Sollbruchstelle 33 die einzelnen Klappenabschnitte 3a und 3b nach Art von Flügeltüren durch einen innen anliegenden Druck nach außen aufgeklappt werden können. Über eine an einer hinteren Mantelfläche 10 vorgesehene Überdruckklappe 3 strömt dabei das Fluid aus dem Hohlraum 100 in der Strömungsrichtung des in dem Bypasskanal BD geführten Fluids aus und gelangt hierüber direkt in den Bypasskanal BD oder in einen Zwischenraum, der von einem an der hinteren Mantelfläche 10 vorgesehenen Hinterkantenelement 2 ausgebildet wird.

Aus der Figur 4C ist ferner ersichtlich, dass in einer möglichen Weiterbildung zusätzlich - vorzugsweise an der Innenseite der Verkleidung 1 - am Rand des Durchlasses 300 und insbesondere im Bereich des Scharnierelements 30 flächige Versteifungsbereiche und - elemente 4a, 4b vorgesehen sein können. Über diese Versteifungsbereiche und - elemente 4a, 4b ist die Verkleidung 1 im Bereich des Durchlasses 300 verstärkt und sichergestellt, dass die Verkleidung 1 bei aufklappender oder aufgeklappter Überdruckklappe 3 außerhalb des Durchlasses 300 nicht versagt. Dementsprechend sind hierdurch z.B. Bereiche am Rand des Durchlasses 300 gezielt verstärkt, an denen die aufklappende und in die Strömung des Bypasskanals BD ragende Überdruckklappe 3 Kräfte in die Verkleidungsstruktur einleitet.

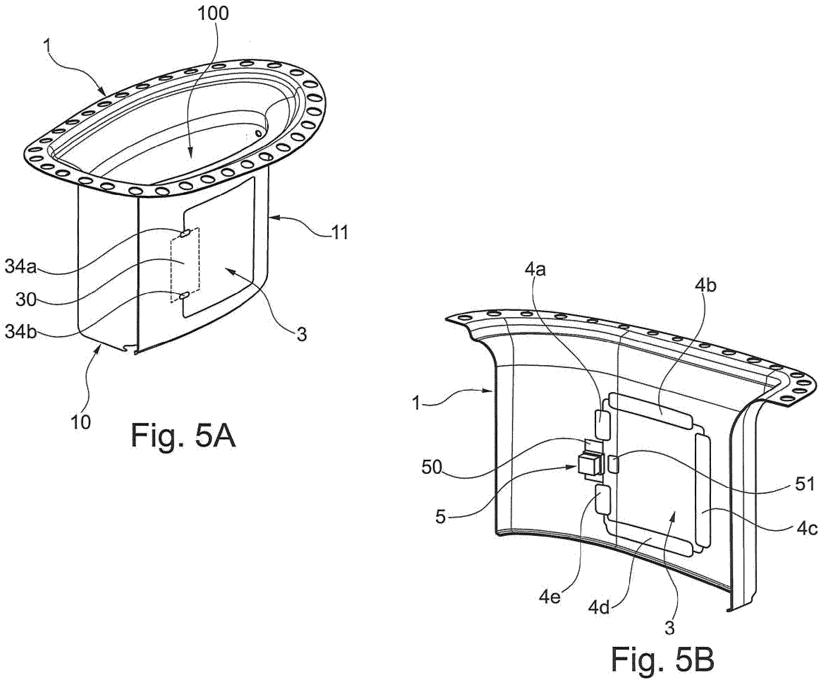

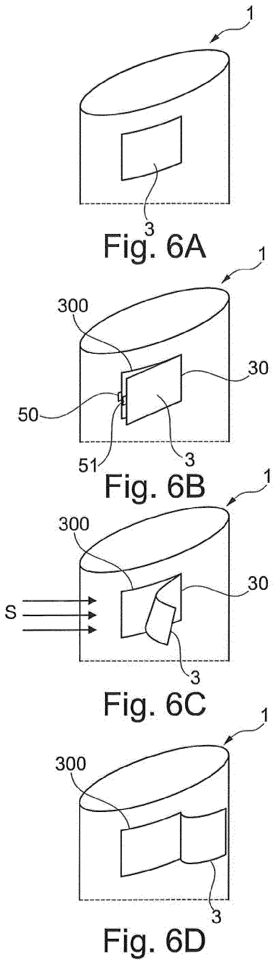

Mit den Figuren 5A bis 5B und 6A bis 6D ist eine weitere Ausführungsvariante veranschaulicht, bei der eine an der Verkleidung 1 vorgesehene Überdruckklappe 3 - alternativ oder ergänzend zu mit Sollbruchstellen versehenen Befestigungselementen - über eine Arretiereinrichtung 5 in einer geschlossenen Position an der Verkleidung 1 gehalten ist. Diese Arretiereinrichtung 5 ist an der Innenseite der Verkleidung 1 vorgesehen und umfasst einerseits, als erstem Teil, eine Arretiereinheit 50 an einem Rand des von der Überdruckklappe 3 verschlossenen Durchlasses 300 sowie, als zweitem Teil, ein Gegenstück an der Innenseite der Überdruckklappe 3 hier in Form eines Arretierblechs 51.

Die Arretiereinheit 50 umfasst ein gegebenenfalls verstellbar gelagertes und angefedertes Arretierstück 50, zum Beispiel in Form eines verschieblich gelagerten Arretierzapfens oder -stifts. Das Arretierstück greift formschlüssig in eine Sicherungsöffnung des Arretierblechs 51 ein, um die Überdruckklappe 3 in der geschlossenen Position zu halten. Steigt der Druck innerhalb des Hohlraums 100 über einen definierten Schwellwert an, übersteigt die an der Überdruckklappe 3 innenseitig angreifende Kraft die durch die Arretiereinrichtung 5 aufgebrachte Haltekraft, sodass der Eingriff des Arretierstücks der Arretiereinheit 50 in das Arretierblech 51 oder umgekehrt der Umgriff des Arretierblechs 51 an dem Arretierstück der Arretiereinheit 50 getrennt wird oder das Arretierstück versagt. Damit wird über den die Arretiereinrichtung 5 aufweisenden Öffnungsmechanismus die Überdruckklappe 3 freigegeben.

Die Arretiereinrichtung 5 ist folglich derart ausgelegt, dass bei einem über den Schwellwert ansteigenden Druck in dem Hohlraum 100 die Überdruckklappe 3 durch die Arretiereinrichtung 5 nicht mehr in ihrer geschlossenen Position gehalten werden kann und die Überdruckklappe 3 freigegeben wird. Infolge des Überdrucks in dem Hohlraum 100 kann dann die Überdruckklappe 3 um die durch das Scharnierelement 30 definierte Scharnierachse aufklappen.

Das Scharnierelement 30 ist hierbei entsprechend den Darstellung der Figur 5A bezogen auf die Strömungsrichtung des Fluids in dem Bypasskanal BD stromab der Arretiereinrichtung 5 angeordnet. Das Scharnierelement 30 wird insbesondere durch zwei entlang der Scharnierachse zueinander beabstandete Aussparungen 34a und 34b in der Verkleidung 1 ausgebildet. Durch die beiden Aussparungen 34a und 34b an der Verkleidung 1 wird gezielt eine Materialschwächung an der seitlichen Mantelfläche 11 der Verkleidung 1 eingebracht, sodass mit dem Scharnierelement 30 ein Biegegelenk für das Aufklappen der Überdruckklappe 3 gebildet ist. Die Aussparungen 34a und 34b liegen hier in Form zweier Langlöcher vor.

Das Scharnierelement 30 und die Arretiereinrichtung 5 sind vorliegend bezogen auf die Strömungsrichtung einer (Bypass-) Strömung in dem Bypasskanal BD hintereinander angeordnet, sodass das weitere Aufklappen der Überdruckklappe 3 nach Freigabe der Überdruckklappe 3 durch die Fluidströmung in dem Bypasskanal BD erfolgt. Dies ist anhand der Figuren 6A bis 6D näher veranschaulicht, die das Aufklappen der Überdruckklappe 3 in unterschiedlichen Phasen zeigen.

Demzufolge ist vorliegend ein zweistufiges Aufklappen der Überdruckklappe 3 vorgesehen. Zunächst gibt die Arretiereinrichtung 5 die Überdruckklappe 3 frei, sodass die Überdruckklappe 3 stromauf des Scharnierelements 30 mit einem freien Ende in den Bypasskanal BD ragt, wenn der Druck in dem Hohlraum 100 über einen Schwellwert ansteigt. Eine Strömung S in dem Bypasskanal BD greift dann an dem hervor ragenden Ende der Überdruckklappe 3 an und drückt die Überdruckklappe 3 in Strömungsrichtung um das Scharnierelement 30 weiter auf. Der Öffnungsmechanismus für die Überdruckklappe 3 und das Scharnierelement 30 sind in dieser Variante somit derart aufeinander abgestimmt und zueinander angeordnet, dass bei einem etwaigen Überdruck in dem Hohlraum 100 zunächst nur eine Verstellung der Überdruckklappe in eine in der Figur 6B exemplarisch veranschaulichte Zwischenposition zugelassen wird. Nach einer entsprechenden ersten Aufklappbewegung ragt ein Ende der Überdruckklappe 3 so weit in den Bypasskanal BD, dass im Betrieb des Turbofan-Triebwerks T die Bypassströmung S die Überdruckklappe 3 weiter aufgedrückt und die Überdruckklappe 3 um ihr Scharnierelement 30 umklappt. Eine nachfolgende zweite Aufklappbewegung der Überdruckklappe 3 aus der Zwischenposition erfolgt damit vornehmlich oder ausschließlich unter Einwirkung der Strömung in dem Bypasskanal BD.

Es sei an dieser Stelle darauf hingewiesen, dass ein zweistufiges Aufklappen der Überdruckklappe 3 selbstverständlich auch im Zusammenhang mit den Ausführungsbeispielen der Figuren 2A bis 4C vorgesehen sein kann. Das Scharnierelement 30 ist hierbei jeweils derart ausgelegt, dass der sich im Hohlraum 100 maximal einstellende Überdruck nur zu einer ersten Aufklappbewegung der Überdruckklappe 3 führt, an deren Ende ein freies Ende der Überdruckklappe 3 in den Bypasskanal BD ragt und ein weiteres Aufklappen infolge der Bypassströmung erfolgt.

Eine Verstellung der Überdruckklappe 3 während der ersten Aufklappbewegung in die Zwischenposition kann durch eine Vorspannung der Überdruckklappe 3 in die Zwischenposition unterstützt sein. Beispielsweise ist die Überdruckklappe 3 hierfür in Richtung der Zwischenposition angefedert, sodass nach einer Freigabe der Überdruckklappe 3 über den jeweiligen Öffnungsmechanismus - zum Beispiel durch versagende Befestigungselemente 310 und/oder außer Eingriff gebrachte Komponenten einer Arretiereinrichtung 5 - die Überdruckklappe 3 unter Einwirkung einer Federkraft in Richtung der Zwischenposition gedrückt wird. Ein entsprechendes Federelement zur Aufbringung einer Federkraft auf die Überdruckklappe 3 kann beispielsweise eine Druckfeder umfassen, die sich einerseits an einem Rand des Durchlasses 300 und andererseits an der Überdruckklappe 3 abstützt. Alternativ oder ergänzend kann eine entsprechende Gummierung und/oder ein Gummibauteil vorgesehen sein, um die Überdruckklappe 3 in Richtung der Zwischenposition mit einer Vorspannkraft zu beaufschlagen.

Bei der Variante der Figuren 5A bis 5B und 6A bis 6D ist ferner anhand der Figur 5B ersichtlich, dass am Rand des Durchlasses 300 eine Vielzahl von Versteifungsbereichen oder -elementen 4a bis 4e vorgesehen sein können, um eine Verformung des Randes des Durchlasses 300 abseits des Scharnierelements 30 entgegenzuwirken. Beispielsweise können flächige und gegebenenfalls streifenförmige Versteifungselemente 4a bis 4e an der Innenseite der seitlichen Mantelfläche 11 fixiert sein, z.B. mittels Schweißen.

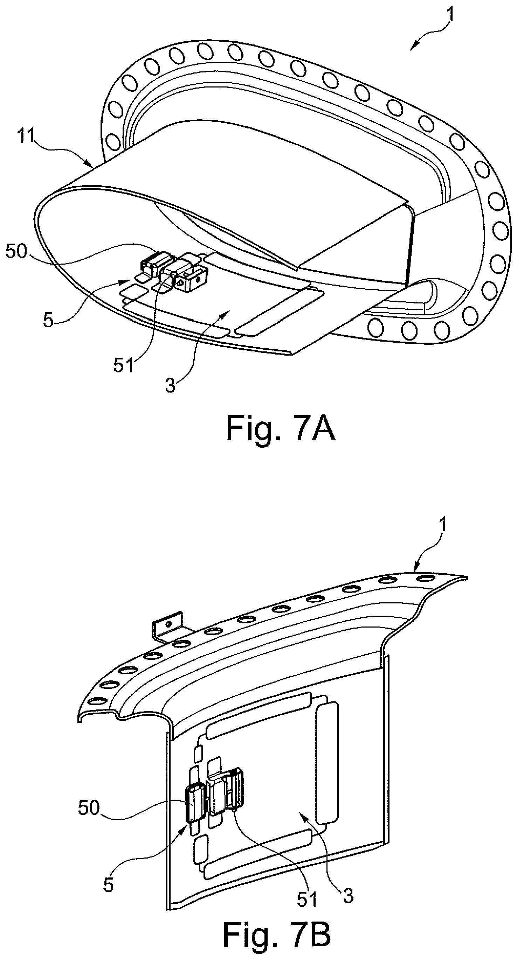

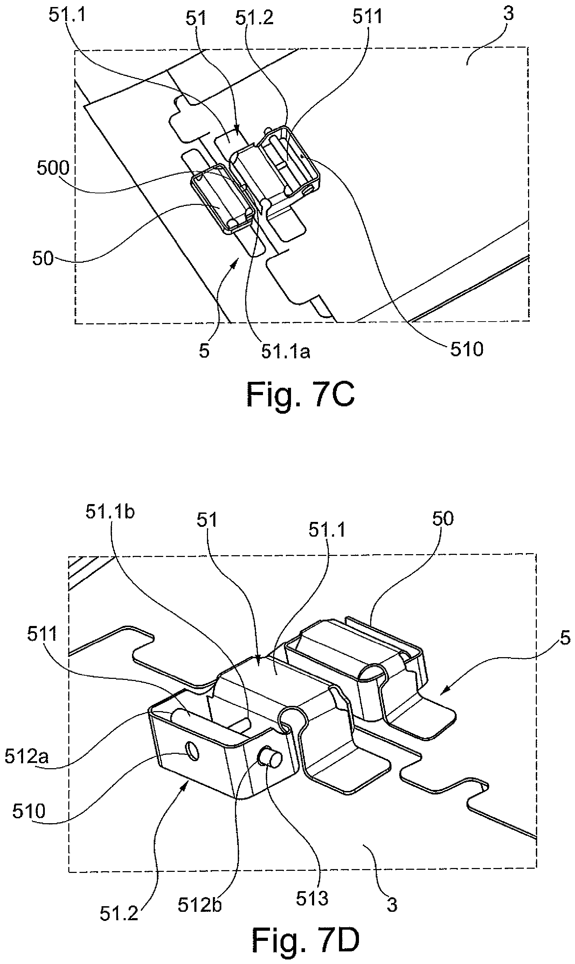

Mit den Figuren 7A bis 7D ist eine Ausführungsvariante der Verkleidung 1 näher veranschaulicht, die ebenfalls eine Arretiereinrichtung 5 umfasst, um die Überdruckklappe 3 in einer geschlossenen Position zu fixieren und zunächst ein teilweises Öffnen der Überdruckklappe 3 bei einem entstehenden Überdruck zu ermöglichen. Die Arretiereinrichtung 5 weist auch hier einen ersten Teil in Form einer Arretiereinheit 50 an einem innenseitigen Rand des von der Überdruckklappe 3 geschlossenen Durchlasses 300 sowie einen zweiten Teil in Form eines Arretierbleches 51 an der Überdruckklappe 3 auf.

In der geschlossenen Position der Überdruckklappe 3 liegen sich die beiden Teile 50 und 51 der Arretiereinrichtung 5 gegenüber, sodass diese über ein in beide Teile 50, 51 eingreifendes Arretierstück in Form eines Arretierstiftes 500 starr miteinander verbindbar sind, um die Überdruckklappe 3 in ihrer geschlossenen Position zu fixieren. Das Arretierblech 51 an der Überdruckklappe 30 weist hierfür zwei Funktionsabschnitte 51.1 und 51.2 auf.

Ein erster Funktionsabschnitt 51.1 liegt dabei in der geschlossenen Position der Überdruckklappe 3 der Arretiereinheit 50 unmittelbar gegenüber und ist hiervon nur durch einen schmalen Zwischenbereich beabstandet. Der erste Funktionsabschnitt 51.1 weist zwei axial zueinander beabstandete Sicherungsöffnungen 51.1a und 51.1b auf, durch die der Arretierstift 500 hindurch greift. Dabei steht der Arretierstift 500 mit einem Ende aus dem Arretierblech 51 hervor und ist - unter Überbrückung des Zwischenbereichs - in die Arretiereinheit 50 eingeschoben, sodass der Arretierstift 500 formschlüssig an beiden Teilen 50 und 51 der Arretiereinheit 5 gehalten ist.

Ein zweiter Funktionsabschnitt 51.2 des an der Überdruckklappe 3 vorgesehenen Arretierblechs 51 dient einerseits dem Einführen des Arretierstiftes 500 in die Sicherungsöffnungen 51.1a und 51.2b und dem Einschieben in die Arretiereinheit 50. Andererseits dient der Funktionsabschnitt 51.2 der Sicherung des bestimmungsgemäß eingeschobenen Arretierstiftes 500 in einer in den Figuren 7A bis 7D dargestellten Verriegelungsposition, in der der Arretierstift 500 an beiden Teilen 50 und 51 der Arretiereinrichtung 5 gehalten ist, und zwar jeweils in zwei axial zueinander beabstandeten Lagerungs- oder Sicherungsöffnungen des jeweiligen Teils 50, 51.

In der Verriegelungsposition ist der Arretierstift 500 soweit in die Arretiereinheit 50 eingeschoben, das der Arretierstift 500 mit seinem einen Ende unmittelbar benachbart zu einer Wandung der Arretiereinheit 50 liegt und ein weitere axiale Verschiebung des Arretierstift 500 in diejenige Einführrichtung verhindert ist, entlang der der Arretierstift 500 von dem Arretierblech 51 aus in die Arretiereinheit 50 eingeschoben wurde. Die hierdurch vorgegebene Verriegelungsposition wird nachfolgend an dem zweiten Funktionsabschnitt 51.2 des Arretierblechs 51 gesichert.

Der zweite Funktionsabschnitt 51.2 weist einerseits eine Montageöffnung 510 auf, durch die hindurch der Arretierstift 500 von außen in die Sicherungsöffnungen 51.1a und 51.1b des ersten Funktionsabschnitts 51.1 und in die Arretiereinheit 50 eingeschoben werden kann. Nimmt der Arretierstift 500 dann seine Verriegelungsposition ein, kann quer zu seiner Einführrichtung ein Verriegelungselement in Form eines Verriegelungsstiftes 511 an den zweiten Funktionsabschnitt 51.2 gesteckt werden, um die Verriegelungsposition zu sichern. Dieser Verriegelungsstift 511 wird von einer Seite des Funktionsabschnitts 51.2 über eine erste Durchgangsöffnung 512a eingeschoben, bis der Verriegelungsstift 511 einen von dem zweiten Funktionsabschnitt 51.2 eingefassten Innenraum überbrückt und aus einer gegenüberliegenden zweiten Sicherungsöffnung 51.1b des zweiten Funktionsabschnitts 51.2 herausragt. An diesem herausragenden Ende des Verriegelungsstiftes 511 wird die Position des Verriegelungsstiftes 511 über ein Sicherungselement in Form eines Sicherungsringes 513 axial gesichert. Der derart an dem zweiten Funktionsabschnitt 51.2 befestigte Verriegelungsstift 511 erstreckt sich dabei zwischen zwei gegenüberliegenden, je eine der Durchgangsöffnungen 51.1a, 51.1b aufweisenden Wandung innerhalb des zweiten Funktionsabschnitt 51.2 und an dem anderen axialen Ende des in der Verriegelungsposition vorliegenden Arretierstifts 500 vorbei. Hierüber blockiert der quer zur Erstreckung des Arretierstifts 500 eingeschobene Verriegelungsstift 511 nach Art eines Riegels eine Verlagerung des Arretierstifts 500 entgegengesetzt zu der ursprünglichen Einführrichtung. Der Arretierstift 500 ist somit über den Verriegelungsstift 511 gegen eine Verlagerung aus seiner Verriegelungsposition gesichert. Der Verriegelungsstift 511 zur axialen Sicherung des Arretierstifts 500 ist hierbei beispielsweise aus Metall gefertigt.

Der Arretierstift 500 ist ferner derart dimensioniert und vorzugsweise aus einem spröden und gegebenenfalls keramischen Material hergestellt, dass der Arretierstift 500 bei einem über einen Schwellwert ansteigenden Druck in dem Hohlraum 100 der Verkleidung 1 versagt und damit die Fixierung der Überdruckklappe 3 an dem Arretierblech 50 und damit die Fixierung der Überdruckklappe in der geschlossenen Position gelöst wird. Durch die axial zueinander beabstandete Halterung des Arretierstifts 500 an zwei Lagerungs- oder Sicherungsöffnungen in dem Arretierblech 51 einerseits und der Arretiereinheit 50 andererseits ist dabei erreichbar, dass der Arretierstift 500 bei einem entstehenden Überdruck üblicherweise in dem Zwischenbereich zwischen den beiden Teilen 50 und 51 der Arretiereinrichtung 5 abschert und hierüber die Überdruckklappe 3 freigibt.

### Bezugszeichenliste

- 1: Verkleidung
- 10: Hintere Mantelfläche
- 100: Hohlraum
- 11: Seitliche Mantelfläche
- 2: Hinterkantenelement
- 20: Sollbruchstelle (Schwächungsbereich)
- 21a, 21b: Klappenabschnitt
- 22a, 22b: Scharnierelement
- 3: Überdruckklappe
- 30, 30.1, 30.2: Scharnierelement
- 300: Durchlass
- 31, 31.1 - 31.4: Haltelasche
- 310: Haltepin (Befestigungselement)
- 3100: Sollbruchstelle (Schwächungsbereich)
- 310a, 310b: Pinhälfte
- 32: Spalt
- 33: Sollbruchstelle (Schwächungsbereich)
- 34a, 34b: Aussparung
- 3a, 3b: Klappenabschnitt
- 4a - 4e: Versteifungselement
- 5: Arretiereinrichtung
- 50: Arretiereinheit mit Arretierstück
- 500: Arretierstift (Arretierstück)
- 51: Arretierblech mit Sicherungsöffnung
- 51.1, 51.2: Funktionsabschnitt
- 51.1a, 51.1b: Sicherungsöffnung
- 510: Montageöffnung
- 511: Verriegelungsstift (Verriegelungselement)
- 512a, 512b: Durchgangsöffnung
- 513: Sicherungsring (Sicherungselement)
- A: Auslass
- AL: Auslassleitung
- B: Brennkammerabschnitt
- BD: Bypasskanal
- F: Fan
- K: Kerntriebwerk
- L1, L2: Leitung
- M: Mittelachse / Rotationsachse
- S: (Bypass-) Strömung
- T: Turbofan-Triebwerk
- TT: Turbine
- V: Verdichter
- VK: Verkleidung

## Patentansprüche

1. Turbofan-Triebwerk, mit
- einem Kerntriebwerk (K) und mindestens einem Fan (F), mittels dem Fluid sowohl zu einem Primärstromkanal für das Kerntriebwerk (K) als auch zu einem Sekundärstromkanal (BD) des Turbofan-Triebwerks (T) geleitet wird, wobei der Sekundärstromkanal (BD) für einen äußeren, an dem Kerntriebwerk (K) vorbeigeführten Fluidstrom vorgesehen ist, und
- mindestens einer Leitung (L1, L2), die innerhalb eines Hohlraums (100) einer in dem Sekundärstromkanal (BD) angeordneten Verkleidung (1) geführt ist,
**dadurch gekennzeichnet, dass**
- die Verkleidung (1) wenigstens eine Überdruckklappe (3) mit mindestens einem verformbaren Scharnierelement (30, 30.1, 30.2) aufweist, unter dessen Verformung die Überdruckklappe (3) bei einem über einen Schwellwert ansteigenden Druck in dem Hohlraum (100) klappbar ist, sodass über eine durch die aufklappende Überdruckklappe (3) freigegebene Öffnung (300) Fluid in Richtung des Sekundärstromkanals (BD) aus dem Hohlraum (100) der Verkleidung (1) ausströmen kann, und
- mindestens ein Öffnungsmechanismus vorgesehen ist, mittels dem bei einem über den Schwellwert ansteigenden Druck in dem Hohlraum (100) eine Fixierung der Überdruckklappe (3) gelöst wird, um ein Aufklappen der Überdruckklappe (3) zu gestatten.

2. Turbofan-Triebwerk nach Anspruch 1, **dadurch gekennzeichnet, dass** der Öffnungsmechanismus mindestens eine Arretiereinrichtung (5) umfasst, die die Überdruckklappe (3) in einer geschlossenen, nicht aufgeklappten Position an der Verkleidung arretiert und die Überdruckklappe (3) bei einem über den Schwellwert ansteigenden Druck in dem Hohlraum (100) freigibt, sodass die Überdrucklappe (3) zumindest teilweise in den Sekundärstromkanal (BD) ragt.

3. Turbofan-Triebwerk nach Anspruch 2, **dadurch gekennzeichnet, dass** das Scharnierelement (30) bei über die Arretiereinrichtung (5) freigegebener Überdruckklappe (3)
a) zunächst ein Klappen der Überdruckklappe (3) in eine Zwischenposition gestattet, in der ein Teil der Überdruckklappe (3) in den Sekundärstromkanal (BD) ragt, und
b) anschließend unter Einwirkung des in dem Sekundärstromkanal (BD) strömenden Fluids, das auf den in den Sekundärstromkanal (BD) ragenden Teil der Überdruckklappe (3) trifft, ein weiteres Aufklappen der Überdruckklappe (3) gestattet.

4. Turbofan-Triebwerk nach Anspruch 3, **dadurch gekennzeichnet, dass** das Scharnierelement (30) und die Arretiereinrichtung (5) derart an der Verkleidung (1) angeordnet sind, dass die über die Arretiereinrichtung (5) freigegebene Überdruckklappe (3) bei einem über den Schwellwert ansteigenden Druck in dem Hohlraum (100) in eine Zwischenposition klappt, in der der in den Sekundärstromkanal (BD) ragende Teil der Überdruckklappe bezogen auf die Strömungsrichtung des Fluids in dem Sekundärstromkanal (BD) stromauf des Scharnierelements (30) liegt.

5. Turbofan-Triebwerk nach einem der vorhergehenden Ansprüche, **dadurch gekennzeichnet, dass** der Öffnungsmechanismus mindestens einen vordefinierten Schwächungsbereich (3100, 33) umfasst, an dem bei einem über den Schwellwert ansteigenden Druck in dem Hohlraum (100) ein Materialversagen auftritt, um ein Aufklappen der Überdruckklappe (3) zu gestatten.

6. Turbofan-Triebwerk nach Anspruch 5, **dadurch gekennzeichnet, dass** der mindestens eine Schwächungsbereich (3100, 33) an einem Element (310) und/oder einem Abschnitt (3a, 3b) ausgebildet ist, über das oder den die Überdruckklappe (3) in einer geschlossenen, nicht aufgeklappten Position gehalten ist.

7. Turbofan-Triebwerk nach Anspruch 6, **dadurch gekennzeichnet, dass** der mindestens eine Schwächungsbereich (3100) an einem Element (310) ausgebildet ist, das mit der Überdruckklappe (3) verbunden ist.

8. Turbofan-Triebwerk nach Anspruch 7, **dadurch gekennzeichnet, dass** der mindestens eine Schwächungsbereich (3100) an einem Befestigungselement (310) ausgebildet ist, über das die Überdruckklappe (3) in der geschlossenen Position bezüglich einer Mantelfläche (11) der Verkleidung (1) fixiert ist und das bei einem in dem Hohlraum (100) über den Schwellwert ansteigenden Druck definiert an dem mindestens einen Schwächungsbereich (3100) versagt.

9. Turbofan-Triebwerk nach Anspruch 8, **dadurch gekennzeichnet, dass** die Überdruckklappe (3) über mehrere an einer Mantelfläche (11) der Verkleidung (1) vorgesehene Halteelemente (31.1 - 31.4) in der geschlossenen Position fixiert ist, wobei die Überdruckklappe (3) mit jedem Halteelement (31.1 - 31.4) über mindestens ein Befestigungselement (310) verbunden ist.

10. Turbofan-Triebwerk nach Anspruch 6, **dadurch gekennzeichnet, dass** der mindestens eine Schwächungsbereich (33) zwischen zwei separat aufklappbaren Abschnitten (3a, 3b) der Überdruckklappe (3) ausgebildet ist.

11. Turbofan-Triebwerk nach einem der vorhergehenden Ansprüche, **dadurch gekennzeichnet, dass** die Überdruckklappe (3) bei einem über einen Schwellwert ansteigenden Druck in dem Hohlraum (100) unter Verformung des mindestens einen Scharnierelements (30, 30.1, 30.2) in den Sekundärstromkanal (BD) klappbar ist.

12. Turbofan-Triebwerk nach einem der vorhergehenden Ansprüche, **dadurch gekennzeichnet, dass** das mindestens eine Scharnierelement (30, 30.1, 30.2) durch einen Bereich an einer Mantelfläche (11) der Verkleidung (1) mit reduzierter Wandstärke und/oder durch mindestens eine Aussparung (34a, 34b) in der Mantelfläche (11) ausgebildet ist

13. Turbofan-Triebwerk nach einem der vorhergehenden Ansprüche, **dadurch gekennzeichnet, dass** die Verkleidung (1) mit einem separaten Hinterkantenelement (2) verbunden ist, das eine in einer Strömungsrichtung des Fluids in dem Sekundärstromkanal (BD) liegende Hinterkante definiert.

14. Turbofan-Triebwerk nach Anspruch 13, **dadurch gekennzeichnet, dass** die Überdruckklappe (3) bei einem über einen Schwellwert ansteigenden Druck in dem Hohlraum (100) unter Verformung des mindestens einen Scharnierelements (30, 30.1, 30.2) in einen Zwischenraum klappbar ist, der von dem Hinterkantenelement (2) berandet ist.

15. Turbofan-Triebwerk nach Anspruch 14, **dadurch gekennzeichnet, dass** das Hinterkantenelement (2) eine Durchgangsöffnung aufweist, die den Zwischenraum mit dem Sekundärstromkanal (BD) verbindet, und/oder das Hinterkantenelement (2) wenigstens eine zusätzliche Überdruckklappe (21a, 21b) aufweist, die unter Versagen an mindestens einem weiteren Schwächungsbereich (20) und unter Verformung mindestens eines weiteren Scharnierelements (22a, 22b) in den Sekundärstromkanal (BD) klappbar ist, wenn ein Druck in dem Zwischenraum über einen Schwellwert ansteigt.

## Claims

1. Turbofan engine having
- a core engine (K) and at least one fan (F) by means of which fluid is directed to a primary flow duct for the core engine (K) as well as to a secondary flow duct (BD) of the turbofan engine (T), wherein the secondary flow duct (BD) is provided for an outer fluid flow that is guided past the core engine (K); and
- at least one line (L1, L2) which is guided within a cavity (100) of a cladding (1) that is disposed in the secondary flow duct (BD),
**characterized in that**
- the cladding (1) has at least one overpressure door (3) having at least one deformable hinge element (30, 30.1, 30.2), the overpressure door (3) in the event of a pressure increasing beyond a threshold value in the cavity (100), while deforming said hinge element (30, 30.1, 30.2) is capable of being swung such that fluid can flow from the cavity (100) of the cladding (1) in the direction of the secondary flow duct (BD) through an opening (300) that is released by the overpressure door (3) swinging open; and
- at least one opening mechanism is provided, by means of which in the event of a pressure increasing beyond the threshold value in the cavity (100) a fixing mechanism of the overpressure door (3) is released in order to permit the overpressure door (3) to swing open.

2. Turbofan engine according to Claim 1, **characterized in that** the opening mechanism comprises at least one locking installation (5) which locks the overpressure door (3) in a closed, not swung-open, position on the cladding and releases the overpressure door (3) in the event of a pressure the threshold value in the cavity (100) such that the overpressure door (3) at least in part protrudes into the secondary flow duct (BD).

3. Turbofan engine according to Claim 2, **characterized in that** the hinge element (30) in the event of an overpressure door (3) that has been released by way of the locking installation (5)
a) first permits swinging of the overpressure door (3) to an intermediate position in which part of the overpressure door (3) protrudes into the secondary flow duct (BD); and
b) subsequently, under the influence of the fluid which flows into the secondary flow duct (BD) and impacts that part of the overpressure door (3) that protrudes into the secondary flow duct (BD), permits the overpressure door (3) to swing open further.

4. Turbofan engine according to Claim 3, **characterized in that** the hinge element (30) and the locking installation (5) are disposed on the cladding (1) in such a manner that the overpressure door (3) that has been released by way of the locking installation (5) in the event of a value increasing beyond the threshold pressure in the cavity (100) swings to an intermediate position in which that part of the overpressure door that protrudes into the secondary flow duct (BD) in terms of the flow direction of the fluid in the secondary flow duct (BD) lies upstream of the hinge element (30).

5. Turbofan engine according to one of the preceding claims, **characterized in that** the opening mechanism comprises at least one predefined weakening region (3100, 33) at which a material failure for permitting the overpressure door (3) to swing open arises in the event of a pressure increasing beyond the threshold value in the cavity (100).

6. Turbofan engine according to Claim 5, **characterized in that** the at least one weakening region (3100, 33) is configured on an element (310) and/or a portion (3a, 3b) by way of which the overpressure door (3) is held in a closed, not swung-open, position.

7. Turbofan engine according to Claim 6, **characterized in that** the at least one weakening region (3100) is configured on an element (310) which is connected to the overpressure door (3).

8. Turbofan engine according to Claim 7, **characterized in that** the at least one weakening region (3100) is configured on a fastening element (310) by way of which the overpressure door (3) in the closed position is fixed in relation to a shell face (11) of the cladding (1) and which fails in a defined manner at the at least one weakening region (3100) in the event of a pressure increasing beyond a threshold value in the cavity (100).

9. Turbofan engine according to Claim 8, **characterized in that** the overpressure door (3) is fixed in the closed position by way of a plurality of holding elements (31.1 - 31.4) that are provided on a shell face (11) of the cladding (1), wherein the overpressure door (3) is connected to each holding element (31.1 - 31.4) by way of at least one fastening element (310).

10. Turbofan engine according to Claim 6, **characterized in that** the at least one weakening region (33) is configured between two portions (3a, 3b) of the overpressure door (3) that are capable of being separately swung open.

11. Turbofan engine according to one of the preceding claims, **characterized in that** the overpressure door (3) in the event of a pressure increasing beyond a threshold value in the cavity (100), while deforming the at least one hinge element (30, 30.1, 30.2) is capable of being swung open into the secondary flow duct (BD).

12. Turbofan engine according to one of the preceding claims, **characterized in that** the at least one hinge element (30, 30.1, 30.2) is configured by a region of reduced wall thickness on a shell face (11) of the cladding (1), and/or by at least one recess (34a, 34b) in the shell face (11).

13. Turbofan engine according to one of the preceding claims, **characterized in that** the cladding (1) is connected to a separate rear edge element (2) which defines a rear edge that lies in a flow direction of the fluid in the secondary flow duct (BD).

14. Turbofan engine according to Claim 13, **characterized in that** the overpressure door (3) in the event of a pressure increasing beyond a threshold value in the cavity (100), while deforming the at least one hinge element (30, 30.1, 30.2) is capable of being swung into an intermediate space which is bordered by the rear edge element (2).

15. Turbofan engine according to Claim 14, **characterized in that** the rear edge element (2) has a passage opening which connects the intermediate space to the secondary flow duct (BD), and/or the rear edge element (2) has at least one additional overpressure door (21a, 21b) which, while failing at at least one further weakening region (20) and while deforming at least one further hinge element (22a, 22b), is capable of being swung into the secondary flow duct (BD) when a pressure in the intermediate space increases beyond a threshold value.

## Revendications

1. Groupe propulseur à turboréacteur à double flux, comprenant
- un groupe propulseur central (K) et au moins une soufflante (F) au moyen de laquelle du fluide peut être conduit aussi bien vers un canal de flux primaire pour le groupe propulseur central (K) et vers un canal de flux secondaire (BD) du groupe propulseur à turboréacteur à double flux (T), le canal de flux secondaire (BD) étant conçu pour un flux de fluide passant à l'extérieur au niveau du groupe propulseur central (K), et
- au moins une conduite (L1, L2) qui chemine à l'intérieur d'un espace creux (100) d'un habillage (1) disposé dans le canal de flux secondaire (BD), **caractérisé en ce que**
- l'habillage (1) possède au moins un clapet de surpression (3) pourvu d'au moins un élément charnière (30, 30.1, 30.2) déformable par la déformation duquel le clapet de surpression (3) peut s'ouvrir par rabattement dans le cas d'une pression dans l'espace creux (100) qui augmente au-dessus d'une valeur de seuil, de sorte que le fluide peut s'écouler vers l'extérieur, en direction du canal de flux secondaire (BD) hors de l'espace creux (100) de l'habillage (1), à travers une ouverture (300) libérée par le clapet de surpression (3) ouvert par rabattement et
- au moins un mécanisme d'ouverture est présent, au moyen duquel un calage du clapet de surpression (3) est libéré dans le cas d'une pression dans l'espace creux (100) qui augmente au-dessus de la valeur de seuil afin de permettre au clapet de surpression (3) de s'ouvrir par rabattement.

2. Groupe propulseur à turboréacteur à double flux selon la revendication 1, **caractérisé en ce que** le mécanisme d'ouverture comporte au moins un dispositif de blocage (5) qui bloque le clapet de surpression (3) dans une position fermée, non ouverte par rabattement contre l'habillage et libère le clapet de surpression (3) dans le cas d'une pression dans l'espace creux (100) qui augmente au-dessus de la valeur de seuil, de sorte que le clapet de surpression (3) fait au moins partiellement saillie dans le canal de flux secondaire (BD).

3. Groupe propulseur à turboréacteur à double flux selon la revendication 2, **caractérisé en ce que** l'élément charnière (30), lorsque le clapet de surpression (3) est libéré par le dispositif de blocage (5),
a) permet tout d'abord au clapet de surpression (3) de se rabattre dans une position intermédiaire dans laquelle une partie du clapet de surpression (3) fait saillie dans le canal de flux secondaire (BD) et
b) permet ensuite au clapet de surpression (3) de continuer à s'ouvrir par rabattement sous l'effet du fluide qui s'écoule dans le canal de flux secondaire (BD) et qui vient frapper contre la partie du clapet de surpression (3) qui fait saillie dans le canal de flux secondaire (BD).

4. Groupe propulseur à turboréacteur à double flux selon la revendication 3, **caractérisé en ce que** l'élément charnière (30) et le dispositif de blocage (5) sont disposés au niveau de l'habillage (1) de telle sorte que le clapet de surpression (3), libéré par le dispositif de blocage (5) dans le cas d'une pression dans l'espace creux (100) qui augmente au-dessus de la valeur de seuil, se rabat dans une position intermédiaire dans laquelle la partie du clapet de surpression qui fait saillie dans le canal de flux secondaire (BD) se trouve en amont de l'élément charnière (30) en référence au sens de l'écoulement du fluide dans le canal de flux secondaire (BD) .

5. Groupe propulseur à turboréacteur à double flux selon l'une des revendications précédentes, **caractérisé en ce que** le mécanisme d'ouverture comporte au moins une zone d'affaiblissement (3100, 33) prédéfinie au niveau de laquelle, dans le cas d'une pression dans l'espace creux (100) qui augmente au-dessus de la valeur de seuil, il se produit une défaillance de matière afin de permettre au clapet de surpression (3) de s'ouvrir par rabattement.

6. Groupe propulseur à turboréacteur à double flux selon la revendication 5, **caractérisé en ce que** l'au moins une zone d'affaiblissement (3100, 33) est formée au niveau d'un élément (310) et/ou d'une portion (3a, 3b) par le biais duquel ou de laquelle le clapet de surpression (3) est maintenu dans une position fermée, non ouverte par rabattement.

7. Groupe propulseur à turboréacteur à double flux selon la revendication 6, **caractérisé en ce que** l'au moins une zone d'affaiblissement (3100) est formée au niveau d'un élément (310) qui est relié au clapet de surpression (3).

8. Groupe propulseur à turboréacteur à double flux selon la revendication 7, **caractérisé en ce que** l'au moins une zone d'affaiblissement (3100) est formée au niveau d'un élément de fixation (310) par le biais duquel le clapet de surpression (3) est calé dans la position fermée par rapport à l'enveloppe (11) de l'habillage (1) et qui, dans le cas d'une pression dans l'espace creux (100) qui augmente au-dessus de la valeur de seuil, rompt au niveau de l'au moins une zone d'affaiblissement (3100).

9. Groupe propulseur à turboréacteur à double flux selon la revendication 8, **caractérisé en ce que** le clapet de surpression (3) est calé dans la position fermée par le biais de plusieurs éléments de maintien (31.1 - 31.4) présents au niveau de l'enveloppe (11) de l'habillage (1), le clapet de surpression (3) étant relié à chaque élément de maintien (31.1-31.4) par le biais d'au moins un élément de fixation (310).

10. Groupe propulseur à turboréacteur à double flux selon la revendication 6, **caractérisé en ce que** l'au moins une zone d'affaiblissement (33) est formée entre deux portions (3a, 3b), pouvant s'ouvrir séparément par rabattement, du clapet de surpression (3).

11. Groupe propulseur à turboréacteur à double flux selon l'une des revendications précédentes, **caractérisé en ce que** le clapet de surpression (3), dans le cas d'une pression dans l'espace creux (100) qui augmente au-dessus d'une valeur de seuil, peut se rabattre dans le canal de flux secondaire (BD) par déformation de l'au moins un élément charnière (30, 30.1, 30.2).

12. Groupe propulseur à turboréacteur à double flux selon l'une des revendications précédentes, **caractérisé en ce que** l'au moins un élément charnière (30, 30.1, 30.2) est formé par une zone au niveau d'une enveloppe (11) de l'habillage (1) ayant une épaisseur de paroi réduite et/ou par au moins un évidement (34a, 34b) dans l'enveloppe (11).

13. Groupe propulseur à turboréacteur à double flux selon l'une des revendications précédentes, **caractérisé en ce que** l'habillage (1) est relié à un élément de bord de fuite (2) séparé qui définit un bord de fuite se trouvant dans un sens d'écoulement du fluide dans le canal de flux secondaire (BD).

14. Groupe propulseur à turboréacteur à double flux selon la revendication 13, **caractérisé en ce que** le clapet de surpression (3), dans le cas d'une pression dans l'espace creux (100) qui augmente au-dessus d'une valeur de seuil, peut se rabattre par déformation de l'au moins un élément charnière (30, 30.1, 30.2) dans un espace intermédiaire qui est bordé par l'élément de bord de fuite (2).

15. Groupe propulseur à turboréacteur à double flux selon la revendication 14, **caractérisé en ce que** l'élément de bord de fuite (2) possède une ouverture de passage qui relie l'espace intermédiaire au canal de flux secondaire (BD), et/ou l'élément de bord de fuite (2) possède au moins un clapet de surpression supplémentaire (21a, 21b) qui peut se rabattre dans le canal de flux secondaire (BD) par rupture au niveau d'au moins une zone d'affaiblissement supplémentaire (20) et par déformation d'au moins un élément charnière supplémentaire (22a, 22b) lorsqu'une pression dans l'espace intermédiaire augmente au-dessus d'un seuil.
